# EUROPEAN PATENT SPECIFICATION

(11) **EP 4 382 459 B1**
(45) Date of publication and mention of the grant of the patent: **12.08.2026**
(21) Application number: 22212297.0
(22) Date of filing: 08.12.2022
(51) Int. Cl.: B65G 43/00, B65G 43/10, B65G 54/02, B65G 37/02

(54) **TRANSPORT SYSTEM FOR TRANSPORTING AT LEAST ONE COMPONENT WITHIN A PROCESSING SYSTEM FOR PROCESSING THE AT LEAST ONE COMPONENT**
TRANSPORTSYSTEM ZUM TRANSPORTIEREN MINDESTENS EINES BAUTEILS INNERHALB EINES VERARBEITUNGSSYSTEMS ZUR VERARBEITUNG DES MINDESTENS EINES BAUTEILS
SYSTÈME DE TRANSPORT POUR TRANSPORTER AU MOINS UN COMPOSANT À L'INTÉRIEUR D'UN SYSTÈME DE TRAITEMENT POUR TRAITER LE AU MOINS UN COMPOSANT

(43) Date of publication of application: 12.06.2024
(73) Proprietor: Robert Bosch GmbH, 70442 Stuttgart (DE)
(72) Inventor: Hibbs, Richard, 5731JV Mierlo (NL); Akkerman, André, 5684 JC Best (NL)

(56) References cited:
- JP-A- 2022 044 957
- US-A1- 2020 171 953
- US-A1- 2022 177 240

## Description

The present invention relates to a transport system for transporting at least one component within a processing system for processing the at least one component, wherein the transport system is configured in such a way, that movement of a movement body or mover in each process station of the processing system is controlled independently of movement of the mover in other parts of the processing system.

The production of goods based on at least one component, respectively the processing of the at least one component is more and more automated. Therein, a corresponding manufacturing system, respectively a processing system for processing at least one component usually comprises at least one process station, wherein each of the at least one process station is configured to perform at least one step of a processing process for processing the at least one component, and a transporting system for successively transporting the at least one component to each of the at least one process station based on corresponding specifications.

Such a transport system usually comprises at least one mover for successively moving the at least one component to each of the at least one process station based on corresponding specifications, wherein movement of the at least one mover is usually controlled by least one control unit, and wherein movement of the at least one mover can for example be realized based on a corresponding track system or rollers attached to the at least one mover. However, such a transport system usually comprises a centralized control unit, wherein the at least one control unit of the transport system is configured to control both, movement of the mover in each process station of the processing system and movement of the mover in other parts of the processing system.

US 5,884,746 A discloses a modular assembly line system having transport means for the transport of workpiece carriers receiving parts or components and having processing stations arranged one behind the other in the direction of conveyance, wherein the transport means have a main circulating path composed of main circulating path segments arranged one behind the other and secondary path segments which can be branched off from the main circulating path segments, and the secondary path segments each have a feed-out section and a feed-in section extending transversely to the main circulating path, a secondary transport section being arranged between the feed-out section and the feed-in section and extending in the direction of conveyance of the main circulating path, with the feed-out section and the feed-in section having opposite directions of conveyance and with the main circulating path segments and/or the secondary path segments accommodating at least one processing station. The feed-out section is configured as a feed-out module and the feed-in section as a feed-in module, which can respectively be coupled in between two main circulating path segments arranged one behind the other. The secondary transport section is configured as at least one station module that can be inserted between the feed-out module and the feed-in module.

JP 2022 044957 A discloses a transport system for transporting at least one component within a processing system for processing the at least one component, according to the preamble of claim 1.

US 2020/0171953 A1 discloses a transport system for transporting at least one component within a processing system for processing the at least one component.

It is an object of the present invention to provide an improved transport system for transporting at least one component within a processing system for processing the at least one component.

This object is solved by the transport system for transporting at least one component within a processing system for processing the at least one component according to claim 1.

According to one embodiment of the invention, this object is solved by a transport system for transporting at least one component within a processing system for processing the at least one component comprising at least one process station, wherein each of the at least process station is configured to perform at least one step of a processing process for processing the at least one component, wherein the transport system comprises at least one mover for moving the at least one component, a first transport unit for transporting the at least one mover to each of at least one process station, and at least one second transporting unit for transporting the at least one mover within each of at least one process station, wherein the first transport unit comprises at least one control unit for controlling movement of the at least one mover in the first transport unit, and wherein the at least one second transport unit comprises at least one further control unit for controlling movement of the at least one mover in the at least one second transport unit, and wherein the transport system further comprises at least one first hand over unit, wherein the at least one first hand over unit is configured to hand over control of the at least one mover from the at least one control unit of the first transport unit to the at least one further control unit of the at least one second transport unit when the at least one mover passes from the first transport unit to the at least one second transport unit, and at least one second hand over unit, wherein the at least one second hand over unit is configured to hand over control of the at least one mover from the at least one further control unit of the at least one second transport unit to the at least one control unit of the at least one first transport unit when the at least one mover passes from the at least one second transport unit to the at least one first transport unit.

Here, a hand over unit is a unit respectively a logical gate that is configured to hand over control of the movement of the at least one mover, respectively to give control of the movement of the at least one mover from the at least one control unit of the first transport unit to the at least one further control unit of the at least one second transport unit.

According to the transport system, control of the movement of the at least one mover in each process station of a processing system for processing at least one component is separated from movement of the at least one mover in other regions of the processing system and movement of the at least one mover in each process station of the processing system can be controlled independently of movement of the least one mover in other parts of the processing system.

Therefore, an improved transport system for transporting at least one component within a processing system for processing the at least one component is provided.

In one embodiment, the at least one control unit of the first transport unit can be configured to independently move each of the at least one mover to a corresponding target based on a corresponding target specification.

Here, that the at least one control unit is configured to independently move each of the at least one mover to a corresponding target based on a corresponding target specification means that the at least one control unit is configured to autonomously move the at least one mover to the corresponding target only based on the target specification, respectively information representing the location or destination of the corresponding target.

Thus, movement of the at least one mover in the first transport unit can be fully autonomous, wherein only a corresponding target specification has to be provided, for example by a user and/or a control unit of the corresponding processing system.

Therein, the transport system can comprise a plurality of movers, wherein the at least one control unit of the first transport unit can be further configured to move each of the plurality of movers to the corresponding target in such a way, that collisions between the plurality of movers when respectively moving each of the plurality of movers to the corresponding target are avoided. Thus, movement of movers in the first transport unit can be fully autonomous, wherein, at the same time, it can be ensured that there are no collisions between the individual movers.

According to the invention, the at least one further control unit of the at least one second transport unit is configured to freely move the at least one mover in the at least one second transport unit based on corresponding specifications.

Here, that the at least one further control unit of the at least one second transport unit is configured to freely move the at least one mover in the at least one second control unit based on corresponding specifications means that the at least one further control unit of the at least one second transport unit is configured to freely move the at least one mover in the at least one second control unit in at least one degree of freedom based on corresponding specifications, wherein movement of the at least one mover in a degree of freedom can be controlled independently of movement of the at least one mover in other degrees of freedom, and wherein the specifications can be provided by a user and/or a control unit of a corresponding processing system.

Thus, movement of the at least one mover can respectively be adapted optimally to a corresponding process station of ta processing system for processing system for processing the at least one component, respectively the process that is carried out in the corresponding process station.

Therein, a separate system of movement coordinates can be assigned to each of the at least one second transport unit, wherein the at least one further control unit of the at least one second transport unit is configured to, in each of the at least one second transport unit, control movement of the at least one mover based on the system of movement coordinates assigned to the corresponding second transport unit.

Here, a movement coordinate is a degree of freedom, respectively a basic way the mover can move through the three-dimensional (3D) space. The system of movement coordinates assigned to at least one second transport unit further defines the entirety of degrees of freedom regarding movement of the at least one mover in the corresponding second transport unit, respectively a process station of a corresponding processing system. For example, there can be six degrees of freedom regarding movement of the at least one mover in a first one of the at least one second transport unit, in particular three translational degrees of freedom and three rotational degrees of freedom, wherein there can only be two degrees of freedom regarding movement of the at least one mover in a second one of the at least one second transport unit, in particular a translational degree of freedom and a rotational degree of freedom.

Thus, movement of the at least one mover can be adapted optimally to each individual process station of a processing system for processing the at least one component, respectively the process that is carried out in the corresponding process station.

According to a further embodiment of the invention, a processing system for processing at least one component is provided, wherein the processing system comprises at least one process station, wherein each of the at least process station is configured to perform at least one step of a processing process for processing the at least one component, and a transport system for transporting at least one component within a processing system for processing the at least one component as described above.

Thus, a processing system for processing at least one component is provided, that comprises an improved transport system for transporting the at least one component within the processing system. According to the transport system, control of the movement of the at least one mover in each process station of the processing system is separated from movement of the at least one mover in other regions of the processing system and movement of the at least one mover in each process station of a processing system can be controlled independently of movement of the least one mover in other parts of a processing system.

The invention will now be described in further detail with reference to the attached drawing, in which:

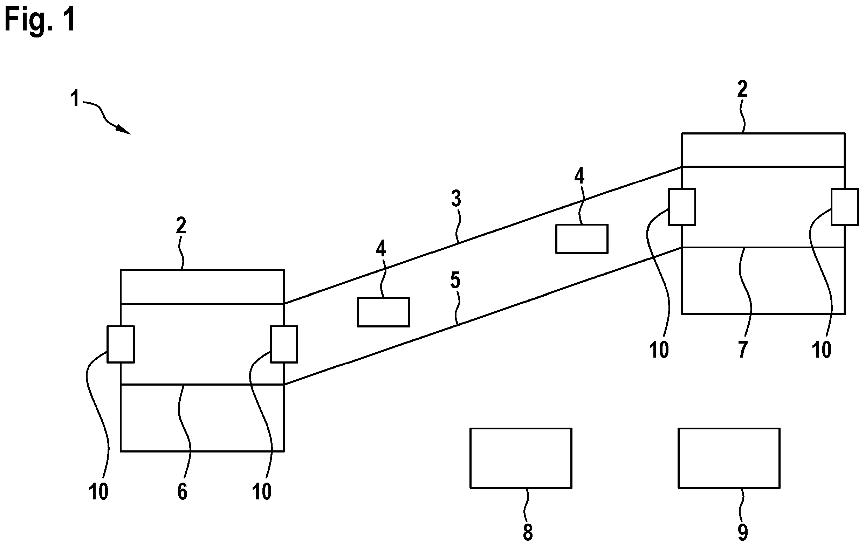

- Fig. 1: illustrates a processing system for processing at least one component according to embodiments of the invention.

The production of goods based on at least one component, respectively the processing of the at least one component is more and more automated. Therein, a corresponding manufacturing system, respectively a processing system for processing at least one component usually comprises at least one process station, wherein each of the at least one process station is configured to perform at least one step of a processing process for processing the at least one component and a transporting system for successively transporting the at least one component to each of the at least one process station based on corresponding specifications.

Such a transport system usually comprises at least one mover for successively moving the at least one component to each of the at least one process station based on corresponding specifications, wherein movement of the at least one mover is usually controlled by at least one control unit, and wherein movement of the at least one mover can for example be realized based on a corresponding track system or rollers attached to the at least one mover. However, the at least one control unit of the transport system is usually configured to control both, movement of the mover in each process station of the processing system and movement of the mover in other parts of the processing system.

Fig. 1 illustrates a processing system for processing at least one component 1 which comprises process stations 2, wherein each of the process stations 2 is configured to perform at least one step of a processing process for processing the at least one component and a transport system 3 transporting the at least one component within the processing system for processing the at least one component 1.

Therein, the transport system 3 comprises at least one mover 4 for moving the at least one component, a first transport unit 5 for transporting the at least one mover to each of the process stations 2, and two second transport units 6,7 for respectively transporting the at least one mover 4 within one of the process stations 2, wherein the first transport unit 5 comprises at least one control unit 8 for controlling movement of the at least one mover 4 in the first transport unit 5, and wherein the second transport units 6,7 comprises a common further control unit 9 for respectively controlling movement of the at least one mover 4 in the second transport units 6,7, and wherein the transport system 3 further comprises first hand over units 10, wherein each of the first hand over units 10 is configured to hand over control of the at least one mover 4 from the at least one control unit 8 of the first transport unit 5 to the common further control unit 9 of the second control units 6,7 when the at least one mover passes from the first transport unit 5 to one of the second transport units 6,7, and second hand over units 11, wherein each of the second hand over units 11 is configured to hand over control of the at least one mover 4 from the common further control unit 9 of the second transport units 6,7 to the at least one control unit 8 of the first transport unit 5 when the at least one mover 4 passes from one of the second transport units 6,7 to the first transport unit 5.

According to the transport system 3, control of the movement of each of the at least one mover 4 in each process station 2 of the processing system 1 is separated from movement of the corresponding mover 4 in other regions of the processing system 1 and movement of a mover 4 in each process station 2 of the processing system 1 can be controlled independently of movement of the mover 4 in other parts of a processing system 1.

Therefore, an improved transport system for transporting at least one component within a processing system for processing the at least one component 3 is provided.

Thus, a transport system for transporting at least one component within a processing system for processing the at least one component 3 is shown, that is based on defined and separately controlled transport regions, comprising process regions and sole transport regions.

Further, although two process stations 2 are shown in Fig. 1, this should merely be an example and the processing system can only comprise one process station or more than two process stations, too.

Furthermore, although a common further control unit 9 is shown in Fig. 1, this should merely be an example and the processing system can comprise more than one further control unit, too, wherein for example a separate further control unit can be assigned to each of the second transport units.

The first hand over units and the second hand over units can further respectively be logical gates, wherein these logical gates can for example respectively be realized by code that is stored in a memory and executable by a processor. Therein, access to one of the second transport units 6,7 from the first transport unit 5 must be explicitly requested by the at least one control unit 8 and granted by the common further control unit 9. Regarding access from one of the second transport units 6,7, the common further control unit 9 notifies the at least one control unit 8, wherein an explicit handover is done when the at least one control unit 8 is ready to control movement of the at least one mover. Thereby, it can be ensured that the at least one mover 4 is always under control of a control unit 8,9.

The first transport unit 5 further has the function to transport the at least one component to one process station and/or from one process station to another wherein the first transport unit can for example be discontinuous in case there is only one degree of freedom regarding movement of the at least one mover in the first transport unit or continuous in case there is more than one degree of movement regarding movement of the at least one mover in the first transport unit.

The second transport units 6,7 further respectively have the function of supporting the execution of a corresponding process step.

According to the embodiments of Fig. 1, the at least one control unit 8 of the first transport unit 5 is configured to independently move each of the at least mover 4 to a corresponding target based on a corresponding target specification.

In particular, only a command regarding the desired target has to be provided, wherein the at least one control unit 8 is configured to automatically determine the optimal path to the desired target.

Therein, the at least one control unit 8 is further configured to determine the optimal path taken into account the constraint that collisions with other movers should be avoided. In particular, the transport system 3 comprises a plurality of movers, wherein the at least one control unit 8 of the first transport unit 5 is further configured to determine the optimal path to the target in such a way, that collisions with other movers can be avoided when moving a mover 4 to the target.

The common further control unit 9 unit is configured to freely move the at least one mover in the at least one second control unit based on corresponding specifications.

In particular, the common further control unit 9 is configured in such a way, that a user can have full real-time control over the motion of each of the at least one mover 4, wherein the corresponding mover 4 can even become part of a mechanism configured to execute the corresponding process step. For example, a corresponding robot does not have to move anymore, and, to the contrary, the at least one component can be freely moved by the corresponding mover 4 to the desired positions.

According to the embodiments of Fig. 1, a separate system of movement coordinates is further assigned to each of the second transport units 6,7, wherein the at least one further control unit 9 is configured to, in each of the second transport units 6,7, respectively control movement of the at least one mover 4 based on the system of movement coordinates assigned to the corresponding second transport unit 6,7.

Therein, the common further control unit 9 can be configured to correspondingly perform coordinates transformation, so that the common further control unit 9 is able to freely move each of the at least one mover 4 in each of the second transport units 6,7.

Thus, a transport system 3 is provided, which is configured in such a way, that a very precise control of the at least one mover is possible in process regions, whereas in a transport region it is only of interest to avoid collisions with other movers.

## Claims

1. Transport system for transporting at least one component within a processing system for processing the at least one component comprising at least one process station (2), wherein each of the at least one process station (2) is configured to perform at least one step of a processing process for processing the at least one component, wherein the transport system (3) comprises at least one mover (4) for moving the at least one component, a first transport unit (5) for transporting the at least one mover (4) to each of the at least one process station (2), and at least one second transporting unit (6,7) for transporting the at least one mover (4) within each of the at least one process station (2), wherein the first transport unit (5) comprises at least one control unit (8) for controlling movement of the at least one mover (4) in the first transport unit (5), and wherein the at least one second transport unit (6,7) comprises at least one further control unit (9) for controlling movement of the at least one mover (4) in the at least one second transport unit(6,7), and wherein the transport system (3) further comprises at least one first hand over unit (10), wherein the at least one first hand over (10) unit is configured to hand over control of the at least one mover (4) from the at least one control unit (8) of the first transport unit (5) to the at least one further control unit (9) of the at least one second transport unit (6,7) when the at least one mover (4) passes from the first transport unit (5) to the at least one second transport unit (6,7), and at least one second hand over unit (11), wherein the at least one second hand over unit (11) is configured to hand over control of the at least one mover (4) from the at least one further control unit (9) of the at least one second transport unit (6,7) to the at least one control unit (8) of the first transport unit (5) when the at least one mover (4) passes from the at least one second transport unit (6,7) to the first transport unit (5), the transport system being **characterized in that** the at least one further control unit (9) of the at least one second transport unit (6,7) is configured to freely move the at least one mover (4) in the at least one second control unit (6,7) based on corresponding specifications in such a way, that movement of the at least one mover (4) in a degree of freedom can be controlled independently of movement of the at least one mover (4) in other degrees of freedom.

2. Transport system according to claim 1, wherein the at least one control unit (8) of the first transport unit (5) is configured to independently move each of the at least mover (4) to a corresponding target based on a corresponding target specification.

3. Transport system according to claim 2, wherein the transport system (3) comprises a plurality of movers (4), and wherein the at least one control unit (8) of the first transport unit (5) is further configured to move each of the plurality of movers (4) in such a way, that collisions between the plurality of movers (4) when respectively moving each of the plurality of movers (4) to the corresponding target are avoided.

4. Transport system according to one of claims 1 to 3, wherein a separate system of movement coordinates is assigned to each of the at least one second transport unit (6,7), and wherein the at least one further control unit (9) of the at least one second transport unit (6,7) is configured to in each of the at least one second transport unit (6,7) control movement of the at least one mover (4) based on the system of movement coordinates assigned to the corresponding second transport unit (6,7).

5. Processing system for processing at least one component, wherein the processing system (1) comprises at least one process station (2), wherein each of the at least process station (2) is configured to perform at least one step of a processing process for processing the at least one component, and a transport system for transporting at least one component within a processing system for processing the at least one component (3) according to one of claims 1 to 4.

## Patentansprüche

1. Transportsystem zum Transportieren mindestens einer Komponente innerhalb eines Bearbeitungssystems zum Bearbeiten der mindestens einen Komponente, das mindestens eine Prozessstation (2) umfasst, wobei jede der mindestens einen Prozessstation (2) dazu ausgelegt ist, mindestens einen Schritt eines Bearbeitungsprozesses zum Bearbeiten der mindestens einen Komponente durchzuführen, wobei das Transportsystem (3) mindestens eine Bewegungsvorrichtung (4) zum Bewegen der mindestens einen Komponente, eine erste Transporteinheit (5) zum Transportieren der mindestens einen Bewegungsvorrichtung (4) zu jeder der mindestens einen Prozessstation (2) und mindestens eine zweite Transporteinheit (6,7) zum Transportieren der mindestens einen Bewegungsvorrichtung (4) innerhalb jeder der mindestens einen Prozessstation (2) umfasst, wobei die erste Transporteinheit (5) mindestens eine Steuereinheit (8) zum Steuern einer Bewegung der mindestens einen Bewegungsvorrichtung (4) in der ersten Transporteinheit (5) umfasst, und wobei die mindestens eine zweite Transporteinheit (6,7) mindestens eine weitere Steuereinheit (9) zum Steuern einer Bewegung der mindestens einen Bewegungsvorrichtung (4) in der mindestens einen zweiten Transporteinheit (6,7) umfasst, und wobei das Transportsystem (3) ferner mindestens eine erste Übergabeeinheit (10), wobei die mindestens eine erste Übergabeeinheit (10) dazu ausgelegt ist, die Steuerung der mindestens einen Bewegungsvorrichtung (4) von der mindestens einen Steuereinheit (8) der ersten Transporteinheit (5) an die mindestens eine weitere Steuereinheit (9) der mindestens einen zweiten Transporteinheit (6,7) zu übergeben, wenn die mindestens eine Bewegungsvorrichtung (4) von der ersten Transporteinheit (5) zu der mindestens einen zweiten Transporteinheit (6,7) übergeht, und mindestens eine zweite Übergabeeinheit (11) umfasst, wobei die mindestens eine zweite Übergabeeinheit (11) dazu ausgelegt ist, die Steuerung der mindestens einen Bewegungsvorrichtung (4) von der mindestens einen weiteren Steuereinheit (9) der mindestens einen zweiten Transporteinheit (6,7) an die mindestens eine Steuereinheit (8) der ersten Transporteinheit (5) zu übergeben, wenn die mindestens eine Bewegungsvorrichtung (4) von der mindestens einen zweiten Transporteinheit (6,7) zu der ersten Transporteinheit (5) übergeht, wobei das Transportsystem **dadurch gekennzeichnet ist, dass** die mindestens eine weitere Steuereinheit (9) der mindestens einen zweiten Transporteinheit (6,7) dazu ausgelegt ist, die mindestens eine Bewegungsvorrichtung (4) in der mindestens einen zweiten Steuereinheit (6,7) basierend auf entsprechenden Spezifikationen derart frei zu bewegen, dass eine Bewegung der mindestens einen Bewegungsvorrichtung (4) in einem Freiheitsgrad unabhängig von einer Bewegung der mindestens einen Bewegungsvorrichtung (4) in anderen Freiheitsgraden gesteuert werden kann.

2. Transportsystem nach Anspruch 1, wobei die mindestens eine Steuereinheit (8) der ersten Transporteinheit (5) dazu ausgelegt ist, jede der mindestens einen Bewegungsvorrichtung (4) basierend auf einer entsprechenden Zielspezifikation unabhängig zu einem entsprechenden Ziel zu bewegen.

3. Transportsystem nach Anspruch 2, wobei das Transportsystem (3) eine Mehrzahl von Bewegungsvorrichtungen (4) umfasst, und wobei die mindestens eine Steuereinheit (8) der ersten Transporteinheit (5) ferner dazu ausgelegt ist, jede der Mehrzahl von Bewegungsvorrichtungen (4) derart zu bewegen, dass Kollisionen zwischen der Mehrzahl von Bewegungsvorrichtungen (4) beim jeweiligen Bewegen jeder der Mehrzahl von Bewegungsvorrichtungen (4) zu dem entsprechenden Ziel vermieden werden.

4. Transportsystem nach einem der Ansprüche 1 bis 3, wobei jeder der mindestens einen zweiten Transporteinheit (6,7) ein separates System von Bewegungskoordinaten zugeordnet ist, und wobei die mindestens eine weitere Steuereinheit (9) der mindestens einen zweiten Transporteinheit (6,7) dazu ausgelegt ist, in jeder der mindestens einen zweiten Transporteinheit (6,7) eine Bewegung der mindestens einen Bewegungsvorrichtung (4) basierend auf dem der entsprechenden zweiten Transporteinheit (6,7) zugewiesenen System von Bewegungskoordinaten zu steuern.

5. Bearbeitungssystem zum Bearbeiten mindestens einer Komponente, wobei das Bearbeitungssystem (1) mindestens eine Prozessstation (2), wobei jede der mindestens einen Prozessstation (2) dazu ausgelegt ist, mindestens einen Schritt eines Bearbeitungsprozesses zum Bearbeiten der mindestens einen Komponente durchzuführen, und ein Transportsystem zum Transportieren mindestens einer Komponente innerhalb eines Bearbeitungssystems zum Bearbeiten der mindestens einen Komponente (3) nach einem der Ansprüche 1 bis 4 umfasst.

## Revendications

1. Système de transport pour le transport d'au moins un composant à l'intérieur d'un système de traitement pour traiter le ou les composants comprenant au moins une station de traitement (2), dans lequel chacune de la ou des stations de traitement (2) est configurée pour exécuter au moins une étape d'un procédé de traitement pour traiter le ou les composants, dans lequel le système de transport (3) comprend au moins un convoyeur (4) pour déplacer le ou les composants, une première unité de transport (5) pour transporter le ou les convoyeurs (4) vers chacune des stations de traitement (2), et au moins une seconde unité de transport (6,7) pour transporter le ou les convoyeurs (4) à l'intérieur de chacune de la ou des stations de traitement (2), la première unité de transport (5) comprenant au moins une unité de commande (8) pour commander le déplacement du ou des convoyeurs (4) dans la première unité de transport (5), et la ou les secondes unité de transport (6,7) comprenant au moins une autre unité de commande (9) pour commander le déplacement du ou des convoyeurs (4) dans la ou les secondes unités de transport (6,7), et dans lequel le système de transport (3) comprend en outre au moins une première unité de transfert (10), dans lequel la ou les premières unités de transfert (10) sont configurées pour transférer la commande du ou des convoyeurs (4) de la ou des unités de commande (8) de la première unité de transport (5) à la ou aux autres unités de commande (9) de la ou des secondes unités de transport (6,7) lorsque le ou les convoyeurs (4) passent de la première unité de transport (5) à la ou aux secondes unités de transport (6,7), et au moins une seconde unité de transfert (11), dans lequel la ou les secondes unités de transfert (11) sont configurées pour transférer la commande du ou des convoyeurs (4) de la ou des autres unités de commande (9) de la ou des secondes unités de transport (6,7) à la ou aux unités de commande (8) de la première unité de transport (5) lorsque le ou les convoyeurs (4) passent de la ou des secondes unités de transport (6,7) à la première unité de transport (5), le système de transport étant **caractérisé en ce que** la ou les autres unités de commande (9) de la ou des secondes unités de transport (6,7) sont configurées pour déplacer librement le ou les convoyeurs (4) dans la ou les secondes unités de commande (6,7) sur la base de spécifications correspondantes de telle manière que le déplacement du ou des convoyeurs (4) suivant un degré de liberté peut être commandé indépendamment du déplacement du ou des convoyeurs (4) dans d'autres degrés de liberté.

2. Système de transport selon la revendication 1, dans lequel la ou les unités de commande (8) de la première unité de transport (5) sont configurées pour déplacer indépendamment chacun du ou des convoyeurs (4) vers une cible correspondante sur la base d'une spécification cible correspondante.

3. Système de transport selon la revendication 2, dans lequel le système de transport (3) comprend une pluralité de convoyeurs (4), et dans lequel la ou les unités de commande (8) de la première unité de transport (5) sont en outre configurées pour déplacer chacun de la pluralité de convoyeurs (4) de telle sorte que des collisions entre la pluralité de convoyeurs (4) lors du déplacement respectif de chacun de la pluralité de convoyeurs (4) vers la cible correspondante sont évitées.

4. Système de transport selon l'une des revendications 1 à 3, dans lequel un système séparé de coordonnées de déplacement est attribué à chacune de la ou des secondes unités de transport (6,7), et dans lequel la ou les autres unités de commande (9) de la ou des secondes unités de transport (6,7) sont configurées pour commander le déplacement du ou des convoyeurs (4) dans chacune de la ou des secondes unités de transport (6,7) sur la base du système de coordonnées de mouvement attribué à la seconde unité de transport (6,7) correspondante.

5. Système de traitement pour traiter au moins un composant, dans lequel le système de traitement (1) comprend au moins une station de traitement (2), dans lequel chacune de la ou des stations de traitement (2) est configurée pour exécuter au moins une étape d'un processus de traitement pour traiter le ou les composants, et un système de transport pour transporter au moins un composant à l'intérieur d'un système de traitement pour traiter le ou les composants (3) selon l'une des revendications 1 à 4.
